# EUROPEAN PATENT SPECIFICATION

(11) **EP 2 015 338 B1**
(45) Date of publication and mention of the grant of the patent: **22.06.2016**
(21) Application number: 08011451.5
(22) Date of filing: 24.06.2008
(51) Int. Cl.: H02B 11/133, H01H 71/08

(54) **Control terminal automatic connection apparatus for draw-out type air circuit breaker and air circuit having the same**
Automatisches Steuerverbindungsendgerät für einen Einschub-Leistungsschalter und damit versehene Schaltung
Appareil de connexion automatique de terminal de commande pour disjoncteur à air de type extractible et circuit équipé de celui-ci

(30) Priority: 12.07.2007 KR 20070070263
(43) Date of publication of application: 14.01.2009
(73) Proprietor: LS Industrial Systems Co., Ltd, Dongan-Gu Anyang, Gyeonggi-Do (KR)
(72) Inventor: Lyu, Jae-Goo, Cheongju Chungcheongbuk-Do (KR)
(74) Representative: Lang, Johannes

(56) References cited:
- CN-Y- 2 550 940
- FR-A1- 2 782 579
- US-A- 4 743 715
- Dr. Ing. Horst Czichos: "HÜTTE - Die Grundlagen der Ingenieurwissenschaften, 31.Auflage," 31 December 2000 (2000-12-31), Springer-Verlag , Berlin , XP002590156 ISBN: 3-540-66882-9 , page K44

## Description

### BACKGROUND OF THE INVENTION

### 1. Field of the Invention

The present invention relates to a draw-out type air circuit breaker, more particularly, to, in a draw-out type air circuit breaker that is movable to three positions, i.e., a disconnected position, a test position and a connected position, a control terminal automatic connection apparatus which is capable of automatically connecting a control terminal installed at a main body and a control terminal installed at a cradle to each other at the test position and the connected position and of automatically disconnecting the terminals from each other at the disconnected position, and an air circuit breaker having the same.

### 2. Description of the Related Art

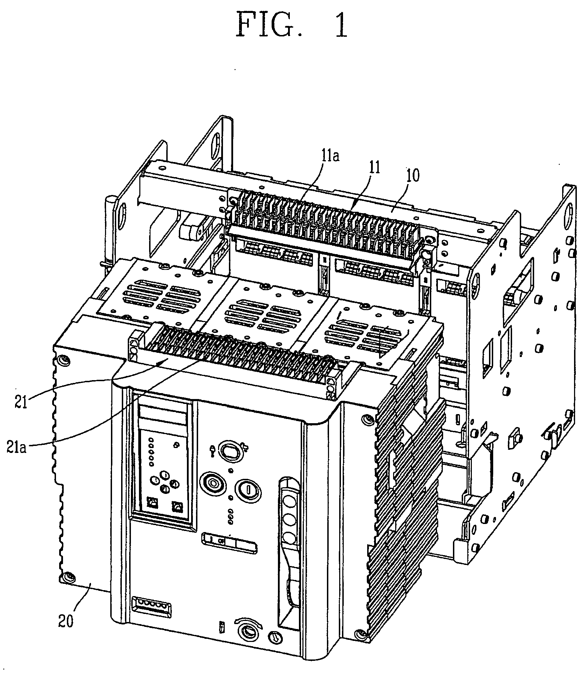

FIG. 1 is a perspective view showing an entire appearance of the related art draw-out type air circuit breaker.

As shown in FIG. 1, the related art draw-out air circuit breaker includes a cradle 10 and a main body 20.

The cradle 10 is provided with an electric terminal (not shown) for being connected to an electrical load and a power source on a circuit. And, the main body 20 is provided with a corresponding electric terminal (not shown) connected to or disconnected from the electric terminal of the cradle 10. The main body 20 is movable to a draw-in position for being connected to the electric terminal of the cradle 10 and a draw-out position for being disconnected therefrom.

The cradle 10 has an upper portion provided with a control terminal 11 installed at the cradle 10 in a width direction. The control terminal 11 is provided with a plurality of connecting pins 11 a having a predetermined length. The plurality of connecting pins 11 a are spaced from each other with a constant interval therebetween. Here, in both the present invention and the related art, the control terminal includes a terminal for inputting a control signal to a controller (so called Over Current Relay abbreviated to OCR) of the air circuit breaker, a terminal for transmitting an output signal from the controller, and a terminal for supplying a power source to the controller.

The main body 20 has the upper portion provided with a control terminal 21 inserted into the control terminal 11 of the cradle 10 and thus electrically connected thereto. The control terminal 21 is provided with a plurality of connecting pins 21 a having a predetermined length. The plurality of connecting pins 21 a are spaced from each other with a constant interval therebetween.

With such configuration, when connecting the electric terminal of the main body 20 and the electric terminal of the cradle 10 to each other, the control terminal 11 of the cradle 10 and the control terminal 21 of the main body 20 are moved in a direction same as a moving direction (backwardly in FIG. 1) for a connection of the main body 20. Accordingly, the connecting pins 11 a, 21a are meshed with each other, thereby being electrically connected to each other.

However, in the draw-out type air circuit breaker in the related art, since the control terminal 11 installed at the cradle 10 and the control terminal 21 installed at the main body 20 are connected to each other in the direction same as the direction for the connection of the main body 20, the load of the main body 20 is transferred to the control terminal 11 of the cradle through the control terminal 21 without buffering. Accordingly, the control terminals 11, 21 may be damaged.

Further, when the control terminal 21 is not completely connected to the control terminal 11 of the cradle 10 resulting from that the circuit breaker is insufficiently moved, the defect connection may be implemented. Accordingly, it may be impossible to control the air circuit breaker.

Further, since the connecting pins 11 a, 21 a of the control terminals 11, 21 are outwardly exposed, electric accidents such as a ground fault, an electric shock may occur. And, when the connecting pins 11 a, 21 a are damaged by an external impact or surfaces thereof are polluted by foreign substances, the defect connection may be implemented.

Further, in case of wiring for the control terminals 11, 21 in accordance with the related art, it is required to solder a plurality of wires corresponding to the connecting pins 11 a, 21 a one by one at a rear side of the plurality of connecting pins 11 a, 21 a. Accordingly, it takes a long time for the wiring process, resulting in a bad productivity and thus increasing a production cost.

Further, the control terminals 11, 21 in accordance with the related art are respectively provided with the terminal for inputting the control signal, the terminal for transmitting the output signal from the controller and the terminal for supplying the power source to the controller, which have the same shape and consecutively disposed with a constant interval therebetween. Accordingly, it is not easy to distinguish the terminals from each other and perform the wiring process corresponding thereto.

Further, the control terminals 11, 21 in accordance with the related art respectively have the terminals for inputting the control signal to the controller, transmitting the output signal from the controller and supplying the power source to the controller and these terminals are integrally formed. Thus, each length of the control terminals 11, 21 is very long and unique, as shown in FIG. 1, accordingly it may cost a lot of money to fabricate molds for the control terminals 11,21.

FR 2 782 579 A1 discloses an aparatus according to the preamble of claim 1.

### SUMMARY OF THE INVENTION

Therefore, a first object of the present invention is to provide a control terminal automatic connection apparatus for an air circuit breaker which is capable of drawing a main body into a cradle at a connected position at which an electric terminal of the main body and an electric terminal of the cradle connected to a load and a power on a circuit are connected to each other, drawing the main body out of the cradle at a disconnected position at which the electric terminals are disconnected from each other, or automatically and reliably performing the connection and the disconnection between the control terminals of the main body and the cradle, and of preventing an excessive load from being applied to the control terminals, and an air circuit breaker having the same.

A second object of the present invention is to provide a control terminal automatic connection apparatus for an air circuit breaker which is capable of amplifying a torque needed to connect an electric terminal of a main body and an electric terminal of a cradle to each other, and an air circuit breaker having the same.

A third object of the present invention is to provide a control terminal automatic connection apparatus for an air circuit breaker which is capable of minimizing electric accidents such as a ground fault, an electric shock by minimizing an exposure of conductor portions of control terminals, and an air circuit breaker having the same.

A fourth object of the present invention is to provide a control terminal automatic connection apparatus for an air circuit breaker which is capable of enhancing a wiring productivity for control terminals and thus reducing a fabrication cost for an air circuit breaker, and an air circuit breaker having the same.

A fifth object of the present invention is to provide a control terminal automatic connection apparatus for an air circuit breaker which is capable of minimizing a mis-wiring for the control terminals and conveniently implementing a wiring process, and an air circuit breaker having the same.

A sixth object of the present invention is to provide a control terminal automatic connection apparatus for an air circuit breaker which is capable of drastically reducing a fabrication cost because molds are not required to fabricate the control terminals, and an air circuit breaker having the same.

To achieve these and other advantages and in accordance with the purpose of the present invention, as embodied and broadly described herein, there is provided a control terminal automatic connection apparatus for an air circuit breaker according to claim 1.

The third object of the invention can be accomplished in a preferred embodiment by providing a control terminal automatic connection apparatus in according to the invention in which a fixed control terminal module installed at a main body and a movable control terminal module installed at a cradle include a plurality of connectors in which electric connection terminals are mounted and having each exterior enclosed by an electric insulating material, and an air circuit breaker having the same.

The forth object of the invention can be accomplished in a preferred embodiment by providing a control terminal automatic connection apparatus in which control terminals are configured to have a structure of pin connectors and thus a pin connector of a wire and a pin connector of the control terminal are connected to each other so as to simplify a wiring process and enhance a wiring productivity for the control terminal, thereby reducing a fabrication cost for an air circuit breaker, and an air circuit breaker having the same.

The fifth object of the invention can be accomplished in a preferred embodiment by providing a control terminal automatic connection apparatus in which control terminals are respectively provided with a connector for inputting a control signal to a controller, a connector for outputting a control signal from the controller and a connector for supplying a power source to the controller according to functions so as to minimize a mis-wiring and conveniently implement a wiring process, and an air circuit breaker having the same.

The sixth object of the invention can be in a preferred embodiment by providing a control terminal automatic connection apparatus in which control terminals are respectively provided with general (easily available in a market) and short connectors, for inputting a control terminal, for outputting from a controller and for supplying a power to the controller, according to functions, so as to save a cost for molds for fabricating specific control terminals and thus drastically reduce a fabrication cost for an air circuit breaker, and an air circuit breaker having the same.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate preferred embodiments of the invention and together with the description serve to explain the principles of the invention.

In the drawings:
FIG. 1 is a perspective view showing an entire appearance of a draw-out type air circuit beaker in the related art;
FIG. 2 is a perspective view showing an entire appearance of a draw-out type air circuit breaker in accordance with one embodiment of the present invention;
FIG. 3 is a front view showing a detailed configuration of a cam in accordance with the present invention;
FIG. 4 is a perspective view showing a configuration of a spindle, a movable plate and rack gears provided on the movable plate of the draw-out type air circuit breaker in accordance with the present invention;
FIG. 5 is a cross-sectional view taken along line II -II in FIG. 2, which shows a state of a control terminal automatic connection apparatus in accordance with the one embodiment of the present invention when the draw-out type air circuit breaker of the present invention is located at a disconnected position;
FIG. 6 is a cross-sectional view taken along line II -II in FIG. 2, which shows a state of the control terminal automatic connection apparatus in accordance with the one embodiment of the present invention when the draw-out type air circuit breaker of the present invention is located at a test position;
FIG. 7 is a cross-sectional view taken along line II -II in FIG. 2, which shows a state of the control terminal automatic connection apparatus in accordance with the one embodiment of the present invention when the draw-out type air circuit breaker of the present invention is located at a connected position; and
FIG. 8 is an enlarged perspective view showing a disconnected state of a fixed control terminal module of the main body and a movable control terminal module of a cradle in the control terminal automatic connection apparatus in accordance with the one embodiment of the present invention.

### DETAILED DESCRIPTION OF THE INVENTION

Description will now be given in detail of the preferred embodiments of the present invention, examples of which are illustrated in the accompanying drawings.

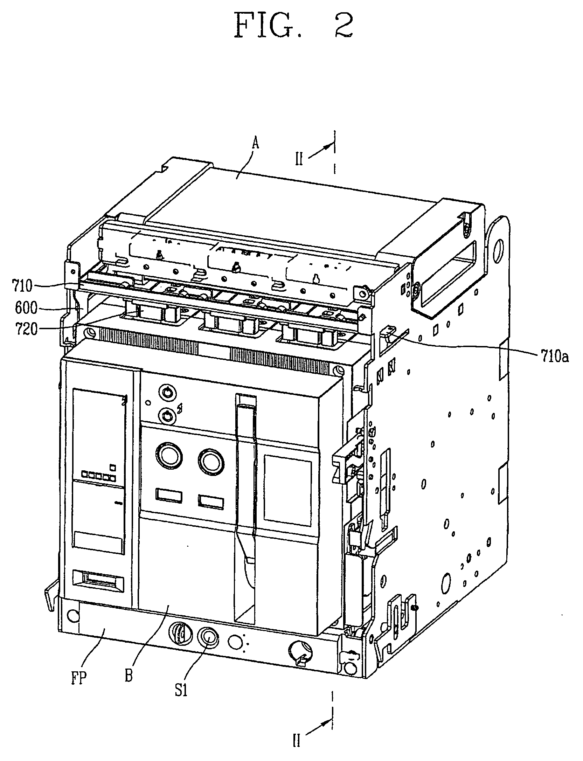

First, a draw-out type air circuit breaker will be described with reference to FIG. 2 as a perspective view showing an entire appearance of the draw-out type air circuit breaker in accordance with one embodiment of the present invention.

As shown in FIG. 2, the draw-out type air circuit breaker in accordance with the one embodiment of the present invention includes a cradle (A) and a main body (B).

The cradle (A) can be connected to an electrical load and a power source on a circuit through an electric terminal (installed at a rear side of the cradle, but not shown).

The main body (B) can be selectively moved to a connected position at which the main body (B) is electrically connected to the cradle (A), a test position at which the main body (B) can receive a power source for a controller and implement a signal input/output to/from the controller even though it is electrically disconnected from the cradle (A), and a disconnected position at which the main body (B) is disconnected from the cradle (A), the power source for the controller is not supplied and the signal input/output to/from the controller is not implemented.

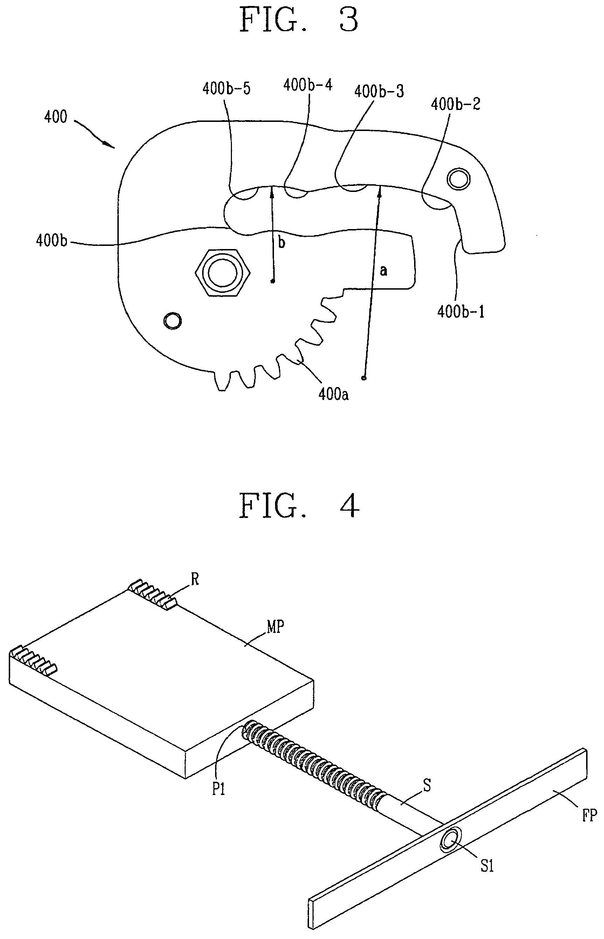

In FIG. 2, the cradle (A) has a front lower portion at which a front manipulating panel (FP) is fixedly installed, as shown in FIG. 4. A handle connecting hole (S1) of a spindle (S) is provided at a middle portion of the front manipulating panel (FP) in a length direction.

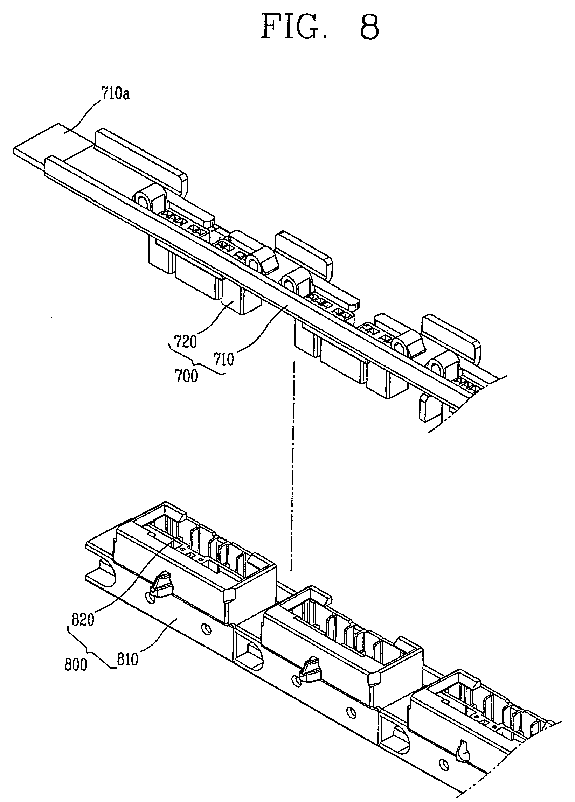

In FIG. 2, a movable control terminal module (refer to 700 in FIG. 8) installed at a cradle (A) of the control terminal automatic connection apparatus for the air circuit breaker in accordance with the present invention, is installed at a front upper portion of the cradle (A) to be vertically movable by a rod 600. The movable control terminal module (refer to 700 in FIG. 8) includes a plurality of connectors 720, three connectors 720 in FIG. 2, and a supporting member 710 that supports the connectors 720 commonly. An unexplained reference numeral 710a is an extended supporting portion extended from both end portions of the supporting member 710 in the length direction so as to support the supporting member 710 by the cradle (A). The extended supporting portion 710a can be moved upwardly and downwardly together with the supporting member 710 along a recess (no reference numeral given) at the cradle (A) provided to allow the supporting member 710 to be moved in a vertical direction.

Meanwhile, referring to FIGS. 2, 4 and 5, the preferred embodiment of the control terminal automatic connection apparatus for the air circuit breaker in accordance with the present invention will be described.

The control terminal automatic connection apparatus for the air circuit breaker in accordance with the present invention, as shown in FIG. 4, includes the spindle (S) having the middle portion of the front plate (FP) at which the handle connecting hole (S1) is exposed and the movable plate (MP) movable back and forth along the threaded portion of the spindle (S) and provided with a thread hole portion (P1) provided with a female threaded portion meshed with the threaded portion of the spindle (S).

One pair of rack rears (R) is provided on an upper surface of the movable plate (MP) with an entire or partial length of the movable plate (MP).

The spindle (S) is provided with the threaded portion and manually rotatable (pivotable) by being connected to a handle (not shown). The spindle (S) may be also electrically rotatable by a motor(no shown).

The rack gears (R) are installed on the upper surface of the movable plate (MP) and thus movable back and forth along with the movable plate (MP) moving back and forth.

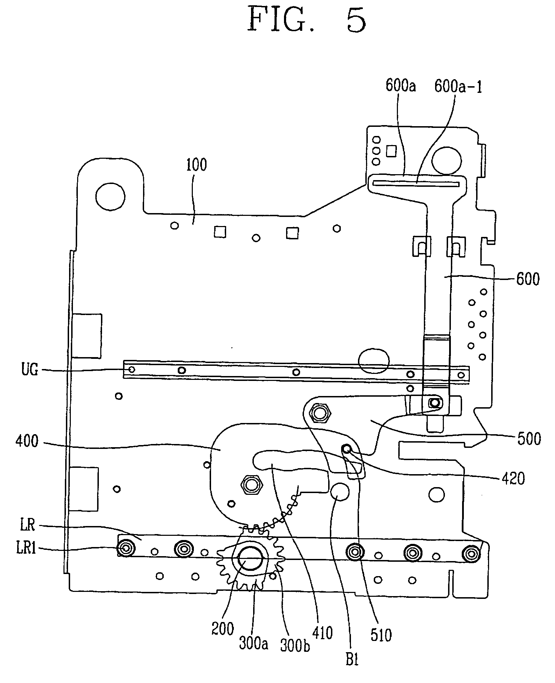

Referring to FIG. 5, the control terminal automatic connection apparatus in accordance with the present invention further includes pinion gears 300a, 300b, a cam 400, a lever 500 and the rod 600.

The pinion gears 300a, 300b are rotatably installed at a pre-determined position on a side plate 100 of the cradle so as to be meshed with the rack gears (R) at the test position, the connected position and the disconnected position of the main body (B). And, the pinion gears 300a, 300b are rotatable according to the rack gears (R) moving back and forth at the test position and the connected position of the main body (B). The pinion gears 300a, 300b include a first pinion gear 300a and meshed with the rack gears (R) and a second pinion gear 300b meshed with teeth portion of the cam 400. The first pinion gear 300a and the second pinion gear 300b are installed on one common rotation shaft 200.

The cam 400 is provided with teeth portion meshed with the pinion gears 300a, 300b, and rotatable so as to transfer a rotation driving force transferred from the pinion gears 300a, 300b.

A radius of the teeth portions of the cam 400 is greater than those of the pinion gears 300a, 300b so as to amplify a torque.

The lever 500 has one end portion connected to the cam 400 or separated from the cam 400. The lever 500 is pivotable by the rotation driving force transferred from the cam 400 when connected to the cam 400.

The cam 400 is provided with a protrusion 420 for transferring the rotation driving force. And, in order to allow the protrusion 420 of the cam to be inserted for transferring the rotation driving force or to be separated for stopping transferring the rotation driving force, the lever 500 is provided with a slot portion 510 corresponding to the protrusion 420 of the cam. Here, the protrusion 420 of the cam has only to be protruded from a plate surface of the cam 400 so as to transfer the rotation driving force of the cam 400, thus may be configured with a modification as a pin member connected by being protruded from the plate surface of the cam 400. In FIG. 5, a protruding portion (B1) may be protruded from the main body (B), or a member (may be implemented as a plate-shaped rail connected to the main body) supporting the main body (B) so as to be moved with the main body (B).

In order to effectively transfer a horizontal driving force for horizontally moving the main body (refer to B in FIG. 2), preferably, a pivot of the cam 400 is disposed to be adjacent to the middle of a height of the main body.

In FIG. 5, in order to horizontally move the main body from the test position to the connected position, the cam 400 is provided with a slot portion 410 coming into contact with the circuit breaker or the protruding portion (B1) of the member supporting the main body so as to provide the horizontal driving force or separated from the protruding portion (B1) so as to stop providing the horizontal driving force.

In order to obtain the torque strong enough to connect the electric terminal of the main body and the electric terminal of the cradle to each other, the slot portion 410 provided at the cam consists of a cam slot portion having cam profiles 400b-1, 400b-3, 400b-5 extended long from the pivot of the cam 400, as shown in FIG. 3.

The cam profiles 400b-1, 400b-3, 400b-5 include an inlet surface 400b-1 forming an inlet of the cam slot portion. In order to decrease an inertial force of the main body, the cam profiles 400b-1, 400b-3, 400b-5 include a first circular arc surface 400b-3 extended from the inlet surface 400b-1 by an angle larger than 90° and smaller than 180°through an inflection point 400b-2, and having a pre-determined first radius of curvature (a). The cam profiles 400b-1, 400b-3, 400b-5 includes a second circular arc surface 400b-5 extended from the first circular arc surface 400b-3 through an inflection point 400b-4, and having a second radius of curvature (b) smaller than the first radius of curvature (a). By the second circular arc surface 400b-5 having the second radius of curvature (b) smaller than the first radius of curvature (a), when the air circuit breaker implements a draw-in operation (moving to the connected position), an angular acceleration and an inertia moment of the cam 400 can be reduced after a reaction force generated by connecting each electric terminal of the cradle and the main body to each other reaches a maximum value. Thus, by contacting the protruding portion (B1) with the second circular arc surface 400b-5 having the second radius of curvature (b) smaller than the first radius of curvature (a), the torque generated from the cam 400 is reduced, accordingly the draw-in operation, namely, moving to the connected position can be smoothly completed.

The rod 600 is connected to the lever 500 and thus movable in the vertical direction according to the rotation of the lever 500. In FIG. 5, the rod 600 can be guided to stably move in the vertical direction by one pair of guiding members (reference numeral not given) spaced from each other with a clearance greater than a width (reference numeral not given) of the rod 600. The rod 600 has an upper portion provided with an upper head portion 600a configured to have a head-like shape by extending the width of the rod 600. The upper head portion 600a is provided with a horizontal supporting slit portion 600a-1 configured to be penetrated by the extended supporting portion 710a of the supporting member 710 to be explained hereafter in the width direction of the upper head portion 600a.

Referring to FIGS. 2 and 8, the control terminal automatic connection apparatus for the air circuit breaker in accordance with the present invention further includes a fixed control terminal module 800 and a movable control terminal module 700.

The fixed control terminal module 800 is fixedly installed at the main body. The fixed control terminal module 800 includes a plurality of connectors 820 (three connectors in FIG. 8) and a supporting member 810 supporting the connectors 820. Each connector 820 is implemented as a pin connector in which a plurality of connection terminals (not shown) formed of an electric conductor and their exterior is enclosed by an electric insulating material. And, preferably, three connectors 820 are implemented according to their functions, a connector for inputting a control signal to the controller, a connector for transmitting an output signal from the controller and a connector for supplying a power source to the controller. Each connector 820 is configured as the pin connector which is generally used.

The movable control terminal module 700 is installed at the cradle (refer to A in FIG. 2 and 100 in FIG. 5). And, the movable control terminal module 700 is connected to the rod 600 and thus movable in the vertical direction along with the rod 600 moving in the vertical direction. That is, in FIG. 5, since the horizontal supporting slit portion 600a-1 provided at the upper head portion 600a of the rod 600 is penetrated by the extended supporting portion 710a of the supporting member 710 as shown in FIG. 2, the movable control terminal module 700 is movable in the vertical direction along with the rod 600 moving in the vertical direction. Accordingly, the movable control terminal module 700 can be moved to a position for being connected to the fixed control terminal module 800 of the main body and a position for being disconnected from the fixed control terminal module 800.

The movable control terminal module 700 installed at the cradle includes a plurality of connectors 720 (three connectors in FIG. 8) and the supporting member 710 supporting the connectors 720. Preferably, three connectors 720 are implemented according to their functions, a connector for inputting a control signal to a controller, a connector for transmitting an output signal from the controller and a connector for supplying a power to the controller. Each connector 720 is configured as the pin connector which is generally used and easily available in a market. Also, the connectors 720 include an upper pin connector portion and a lower pin connector portion, accordingly the upper pin connector portion can be connected to a connector (not shown) of a wire for inputting a control signal, a connector (not shown) of a wire for transmitting an output signal from the controller and a connector (not shown) of a wire for supplying a power source to the controller, and the lower pin connector portion can be connected to the connector 820 of the main body.

As aforementioned, referring to FIG. 2, the supporting member 710 is provided with extended supporting portions 710a at both end portions in the length direction.

Each connector 720 is provided with electric connection terminals, namely, the plurality of connection terminals formed of an electric conductor therein and enclosed by an electric insulating material. And, each connector 720 is implemented as the pin connector.

In FIG. 5, an unexplained reference numeral 100 indicates both side plates of the cradle (refer to A in FIG. 2), an unexplained reference character UG designates an upper guide guiding the main body when implementing a draw-in or draw-out operation, an unexplained reference character LR designates a lower rail guiding the main body to the connected position or the disconnected position, and an unexplained reference character LR1 designates a plurality of rollers that serves to reduce the inertial force when the main body is moved to the connected position or the disconnected position by being pivotably installed at the lower rail (LR).

Meanwhile, a configuration of the air circuit breaker having the control terminal automatic connection apparatus in accordance with the present invention will be described with reference to FIGS. 2, 5 and 8.

The air circuit breaker in accordance with the present invention includes the cradle (A), the main body (B), the spindle (S), the movable plate (MP), the rack gears (R), the pinion gears 300a, 300b, the cam 400, the lever 500, the rod 600, the fixed control terminal module 800 and the movable control terminal module 700.

The cradle (A) is provided with the electric terminal (located at the rear side of A in FIG. 2, but not shown) that can be connected to the load and the power on the circuit.

The main body (B) is movable to the connected position at which the main body (B) is electrically connected to the cradle (A), the test position at which the main body (B) is electrically disconnected from the cradle but the control power source is connected thereto and the signal input/output can be implemented, and the disconnected position at which the main body (B) is disconnected from the cradle (A), the control power source is not disconnected and the signal input/output is not implemented.

The spindle (S) is provided with the threaded portion, as shown in FIG. 4. And, the handle connecting hole (S1) is provided at the spindle (S), accordingly the spindle (S) is manually rotatable by being connected to the handle (not shown).

The movable plate (MP) is connected to the threaded portion of the spindle (S) by a screw and thus movable back and forth along the threaded portion of the rotating spindle (S).

The rack gears (R) are installed on the upper surface of the movable plate (MP) and thus movable back and forth along with the movable plate (MP) moving back and forth.

The pinion gears 300a, 300b are installed at the pre-determined position on the side plate 100 of the cradle so as to be meshed with the rack gears (R) at the test position, the connected position and the disconnected position of the main body (B). And, the pinion gears 300a, 300b are rotatable according to the rack gears (R) moving back and forth at the test position, the connected position and the disconnected position of the main body (B).

The cam 400 is provided with a plurality of teeth portions meshed with the pinion gears 300a, 300b, and rotatable so as to transfer the rotation driving force transferred from the pinion gears 300a, 300b.

The lever 500 can have one end portion connected to the cam 400 or separated from the cam 400. And, when connected to the cam 400, the lever 500 is rotatable by the rotation driving force transferred from the cam 400.

The rod 600 is connected to the lever 500 and thus movable in the vertical direction according to the rotating lever 500.

The fixed control terminal module 800 is installed at the main body (B).

The movable control terminal module 700 is installed at the cradle (A) and connected to the rod (600). Accordingly, the movable control terminal module 700 is movable in the vertical direction along with the rod 600 moving in the vertical direction, and thus movable to a position for being connected to the fixed control terminal module 800 of the main body (B) and a position for being disconnected from the fixed control terminal module 800.

Details regarding each component of the air circuit breaker are specified in the description of the control terminal automatic connection apparatus for the air circuit breaker in accordance with the preferred embodiment of the present invention, thus will be omitted.

Meanwhile, operations of the control terminal automatic connection apparatus for the air circuit breaker and the air circuit breaker having the same in accordance with the preferred embodiment of the present invention will be described with reference to FIGS. 2 to 7.

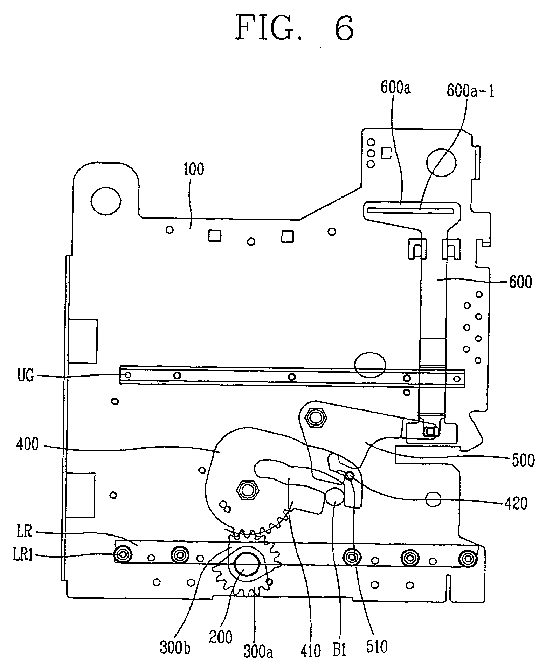

First, an operation of moving the main body from the disconnected position shown in FIG. 5, to the test position shown in FIG. 6.

As shown in FIG. 2, when the handle (not shown) is inserted into the handle connecting hole (S1) located at the middle portion of the front manipulating panel (FP) of the air circuit breaker in the length direction and thus the spindle (S) is rotated in a clockwise direction, the movable plate (MP) is moved to the front side of the air circuit breaker along the threaded portion of the spindle (S) as shown in FIG. 4, namely, toward the front manipulating panel (FP) in FIG. 2 (rightwardly in FIG. 5).

Since the pinion gears 300a, 300b are located at the predetermined position of the side plate 100o of the cradle, the rack gears (R) installed on the movable plate (MP) are meshed with the first pinion gear 300a of the pinion gears 300a, 300b at the test position and rotates the first pinion gear 300a in a counter-clockwise direction. Accordingly, the rotation shaft 200 is rotated in the counter-clockwise direction and the second pinion gear 300b coaxially connected to the rotation shaft 200 is also rotated in the counter-clockwise direction.

Accordingly, the cam 400 having the teeth portions meshed with the second pinion gear 300b is rotated in the clockwise direction from the state shown in FIG. 5. Here, since the radius of the teeth portion of the cam 400 is larger than those of the pinion gears 300a, 300b, the cam 400 generates a torque amplified more than the torque of the second pinion gear 300b. And, the protruding portion (B1) protruded from the main body or the supporting member which can be supportingly moved along with the main body is located at the inlet of the slot portion 410 of the cam 400.

The torque of the cam 400 is transferred to the lever 500 connected to the protrusion 420 of the cam 400 through the slit portion 510, resulting from the rotation of the cam 400 in the clockwise direction, accordingly the lever 500 is rotated in the clockwise direction as shown in FIG. 6.

Accordingly, the rod 600 having the lower end portion connected to one end portion of the lever 500 is guided by the guiding member (reference character not given) and descends in the vertical direction.

According to the descent of the rod 600, the movable control terminal module 700 of the cradle (A) connected to the rod 600 also descends in the vertical direction by the extended supporting portion 710a extended with penetrating the horizontal supporting slit portion 600a-1 of the rod 600. Accordingly, as shown in FIG. 8, the connector 720 of the movable control terminal module 700 is inserted into the connector 820 of the fixed control terminal module 800 fixed at the main body, and a female conductor portion and a male conductor portion respectively having structures of the pin connector (not shown) in both connectors 720, 820 come into contact with each other to be connected to each other mechanically and electrically. Accordingly, the moving operation of the main body from the disconnected position to the test position and the automatic connection operation of the control terminals are completed.

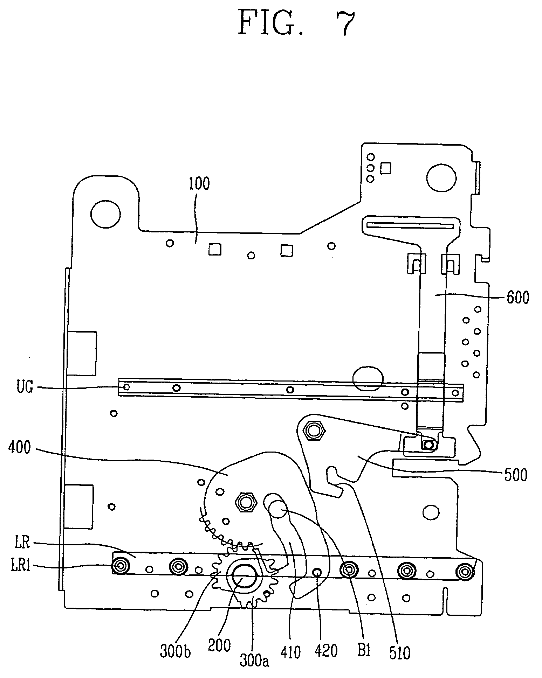

Next, referring to FIGS. 2 to 8, particularly FIGS. 6 and 7, in the control terminal automatic connection apparatus for the air circuit breaker and the air circuit breaker having the same in accordance with the present invention, an operation for moving the main body from the test position to the connected position will be described.

When the handle (not shown) is inserted into the handle connecting hole (S1) located at the middle portion of the front manipulating panel (FP) of FIG. 2 in the length direction in a state shown in FIG. 6, and thus the spindle (S) is further rotated in the clockwise direction, the movable plate (MP) shown in FIG. 4 is further moved toward the front side of the air circuit breaker along the threaded portion of the spindle (S), namely, toward the front manipulating panel (FP) in FIG. 2 (rightwardly in FIG. 5).

The first pinion gear 300a meshed with the rack gears (R) installed on the movable plate (MP) at the test position is further rotated in the counter-clockwise direction. Accordingly, the rotation shaft 200 is further rotated in the counter-clockwise direction and the second pinion gear 300b coaxially connected to the rotation shaft 200 is also further rotated in the counter-clockwise direction.

Accordingly, the cam 400 having the teeth portion meshed with the second pinion gear 300b is further rotated in the clockwise direction from the state shown in FIG. 6. Here, since the radius of the teeth portion of the cam 400 is larger than those of the pinion gears 300a, 300b, the cam 400 generates the torque amplified comparing with the torque of the second pinion gear 300b. And, the protruding portion (B1) located at the inlet of the slot portion 410 of the cam 400 at the test position is pressed by the slot portion 410 by the rotation of the cam 400 in the clockwise direction. Accordingly, the protruding portion (B1) is moved in the horizontal direction along the cam profiles of the slot portion 410 as shown in FIG. 7, and thus located at the rear side of the cradle, namely, the left side on the drawing. As shown in FIG. 3, with coming into contact with the inlet surface 400b-1 and the first circular arc surface 400b-3 extended from the inlet surface 400b-1 by an angle larger than 90°and smaller than 180°through an inflection point 400b-2 and having the pre-determined first radius of curvature (a) by the cam 400 rotating in the clockwise direction, the main body pressed through the protruding portion (B1) is smoothly and rapidly moved to the connected position in the horizontal direction. Accordingly, the moving operation of the main body from the test position to the connected position at which the electric terminals of the main body and the cradle are electrically and mechanically connected to each other is completed. Also, each angular acceleration and inertia moment of the cam 400 is reduced after the reaction force generated by connecting each electric terminal of the cradle and the main body to each other reaches a maximum value, because the protruding portion (B1) comes into contact with the second circular arc surface 400b-5 having the second radius of curvature (b) smaller than the first radius of curvature (a). That is, by contacting the protruding portion (B1) with the second circular arc surface 400b-5 having the second radius of curvature (b) smaller than the first radius of curvature (a), the torque generated from the cam 400 is reduced, accordingly the draw-in operation, namely, moving to the connected position can be smoothly completed.

Here, as the cam 400 is further rotated in the clockwise direction, the protrusion 420 of the cam 400 is separated from the slit portion 510 of the lever 500, as shown in FIG. 7. Accordingly, the torque of the cam 400 is not transferred to the lever 500 any more.

Accordingly, the driving force is not transferred from the terminal 400 to the control terminal, namely, the movable control terminal module 700 through the lever 500 and the rod 600 when performing the displacing operation to the connected position. Thus, it is capable of preventing an excessive load from being applied to the control terminals, namely, the movable control terminal module 700 and the fixed control terminal module 800.

However, the rod 600 maintains its descended state by a self load as shown in FIG. 7, accordingly the movable control terminal module 700 of the cradle (A) connected to the rod 600 by the extended supporting portion 710a extended with penetrating the horizontal supporting slit portion 600a-1 of the rod 600 also maintains its state descended in the vertical direction. Thus, as shown in FIG. 8, the connector 720 of the movable control terminal module 700 is inserted into the connector 820 of the fixed control terminal module 800 fixed at the main body at the test position, accordingly the female conductor portion and the male conductor portion (not shown) having the pin connector structures in both connectors 720, 820 come into contact with each other to remain connected to each other mechanically and electrically. Accordingly, the main body is moved from the test position to the connected position, and simultaneously, the control terminals are automatically connected to each other. Also, the electrical load and the power source on the circuit are electrically connected to each other. And, the power source is supplied to the controller of the air circuit breaker and the input/output terminals maintain the connected state.

Meanwhile, an operation for moving the main body from the connected position shown in FIG. 7 to the test position shown in FIG. 6 will be described.

When the handle (not shown) is inserted into the handle connecting hole (S1) located at the middle portion of the front manipulating panel (FP) of FIG. 2 in the length direction and then the spindle (S) is rotated in the counter-clockwise direction, the movable plate (MP) shown in FIG. 4 is moved toward the rear side of the air circuit breaker, namely, in a direction to be distant from the front manipulating panel (FP) in FIG. 2 (leftwardly in FIG. 5) along the threaded portion of the spindle (S).

The rack gears (R) installed on the movable plate (MP) backwardly moving are also backwardly moved, accordingly the first pinion gear 300a meshed with the rack gears (R) is rotated in the clockwise direction. Thus, the rotation shaft 200 is rotated in the clockwise direction and the second pinion gear 300b coaxially connected to the rotation shaft 200 is also rotated in the clockwise direction.

Accordingly, the cam 400 having the teeth portion meshed with the second pinion gear 300b is changed into a state shown in FIG. 6 by being rotated in the counter-clockwise direction from a state shown in FIG. 7. Here, since the radius of the teeth portion of the cam 400 is larger than those of the pinion gears 300a, 300b, the cam 400 generates the torque amplified more than the torque of the second pinion gear 300b. And, here, the protruding portion (B1) located at the second circular arc surface 400b-5 of the slot portion 410 of the cam 400 at the connected position is pressed by the slot portion 410 by the rotation of the cam 400 in the counter-clockwise direction, and thus horizontally moved toward the front side of the cradle along the cam profiles of the slot portion 410, namely, rightwardly on the drawing, as shown in FIG. 6. Accordingly, the main body is also moved toward the front side of the cradle by the horizontal displacement of the protruding portion (B1). Accordingly, the electric terminals of the main body and the cradle are separated from each other mechanically and electrically.

And, the protrusion 420 of the cam 400 comes into contact with the inlet of the slit portion 510 of the lever 500 as shown in FIG. 6, resulting from the rotation of the cam 400 in the counter-clockwise direction.

The rod 600 having the lower end portion connected to the one end portion of the lever 500 maintains its connected state with being vertically descended.

Thus, the movable control terminal module 700 of the cradle (A) connected to the rod 600 by the extended supporting portion 710a extended with penetrating the horizontal supporting slit portion 600a-1 of the rod 600 also maintains its vertically descended state. Accordingly, as shown in FIG. 8, the connector 720 of the movable control terminal module 700 is inserted into the connector 820 of the fixed control terminal module 800 fixed at the main body, and then the female conductor portion and the male conductor portion (not shown) having the pin connector structures in both connectors 720, 820 come into contact with each other to remain in its mechanically and electrically connected state. As a result of the moving operation for the main body from the connected position to the test position, the control terminals remain connected to each other, the load and the power on the circuit are electrically disconnected from each other, the power is supplied to the controller of the air circuit breaker, and the input/output terminals of the main body and the cradle are connected to each other.

Meanwhile, an operation for moving the main body from the test position shown in FIG. 6 to the disconnected position shown in FIG. 5 will be described.

When the handle (not shown) is inserted into the handle connecting hole (S1) located at the middle portion of the front manipulating panel (FP) of FIG. 2 in the length direction and then the spindle (S) is further rotated in the counter-clockwise direction, the movable plate (MP) shown in FIG. 4 is moved toward the rear side of the air circuit breaker, namely, in a direction to be further distant from the front manipulating panel (FP) in FIG. 2 (leftwardly in FIG. 6) along the threaded portion of the spindle (S).

The rack gears (R) installed on the movable plate (MP) is also moved to be further distant from the front manipulating panel (FP) (leftwardly in FIG. 6), accordingly the first pinion gear 300a meshed with the rack gears (R) is further rotated in the clockwise direction from the test position. Thus, the rotation shaft 200 is further rotated in the clockwise direction and the second pinion gear 300b coaxially connected to the rotation shaft 200 is also further rotated in the clockwise direction.

Accordingly, the cam 400 having the teeth portions meshed with the second pinion gear 300b is rotated in the counter-clockwise direction from the state shown in FIG. 6. Here, the protruding portion (B1) is separated from the slot portion 410 of the cam 400 to be in the state shown in FIG. 5.

And, resulting from the rotation of the cam 400 in the counter-clockwise direction, the lever 500 connected to the protrusion 420 of the cam 400 through the slit portion 510 is rotated in the counter-clockwise direction as shown in FIG. 5.

Accordingly, the rod 600 having the lower end portion connected to the one end portion of the lever 500 is guided by the guiding member (no reference character given) and thus ascends in the vertical direction.

Resulting from the ascent of the rod 600, the movable control terminal module 700 of the cradle (A) connected to the rod 600 by the extended supporting portion 710a extended with penetrating the horizontal supporting slit portion 600a-1 of the rod 600 also ascends in the vertical direction. Accordingly, as shown in FIG. 8, the connector 720 of the movable control terminal module 700 is disconnected from the connector 820 of the fixed control terminal module 800 fixed at the main body, and the female conductor portion and the male conductor portion (not shown) having the pin connector structures in both connectors 720, 820 are mechanically and electrically disconnected from each other. Accordingly, the operation for moving the main body from the test position to the disconnected position and the automatic connection operation of the control terminals are completed.

In the control terminal automatic connection apparatus and an air circuit breaker having the same in accordance with the present invention, it is capable of connecting or disconnecting the control terminal of the main body and the control terminal of the cradle to/from each other automatically and reliably, at the connected position, the test position or the disconnected position.

Further, in accordance with the present invention, the driving force is not transferred from the cam to the control terminal when moving the main body to the connected position, it is capable of preventing the excessive load from being applied to the control terminals.

Further, in accordance with the present invention, it is capable of amplifying the torque needed to connect the electric terminals of the main body and the cradle to each other.

Further, in accordance with the present invention, the control terminals are implemented as the pin connectors enclosed by the electric insulating material with being connected to each other upwardly and downwardly, accordingly it is capable of minimizing an exposure of the conductor portions, thereby being capable of minimizing electric accidents such as a ground fault and an electric shock.

Further, in accordance with the present invention, the control terminals are implemented as the pin connectors, accordingly the wiring process can be simply implemented by connecting the pin connector of the wire and the pin connector of the control terminal to each other and thus it is capable of enhancing a wiring productivity for the control terminals, thereby being capable of reducing the production cost for the air circuit breaker.

Further, in accordance with the present invention, the control terminals are provided with connectors according to their functions, the connector for inputting the control signal to the controller, the connector for transmitting the output signal from the controller and the connector for supplying the power to the controller, accordingly it is capable of minimizing a mis-wiring and conveniently implementing the wiring process.

Further, in accordance with the present invention, the control terminals are provided with general and short connectors according to their functions, the connector for inputting the control signal to the controller, the connector for transmitting the output signal from the controller and the connector for supplying the power source to the controller, accordingly it is not required to cost for molds for fabricating specific control terminals, thereby being capable of drastically reducing the fabrication cost for the air circuit breaker.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present inventive features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims.

## Claims

1. A control terminal automatic connection apparatus for an air circuit breaker, in an air circuit breaker comprising a cradle (A) electrically connected to an electrical load and a power source on a circuit, and a main body (B) that is movable to a connected position at which the main body is electrically connected to the cradle, a test position at which the main body is electrically disconnected from the cradle but a control power source is connected and a signal input/output is implemented, and a disconnected position at which the main body is electrically disconnected from the cradle, the control power source is not supplied and the signal input/output is not implemented, the control terminal automatic connection apparatus comprising:
a spindle (S) provided with a threaded portion and manually rotatable by being connected to a handle;
a movable plate (MP) connected to the threaded portion of the spindle by meshing so as to be movable back and forth along the threaded portion of the rotating spindle;
a rack gear (R) installed on an upper surface of the movable plate so as to be movable back and forth along with the movable plate moving back and forth;
a pinion gear (300a, 300b), provided with a teeth portion,
installed at respective positions of the main body to be meshed with the rack gear and thus pivotable according to the rack gear moving back and forth;
a cam (400) provided with teeth portion meshed with the pinion gear, the cam being rotatable so as to transfer a rotation driving force from the pinion gear;
a lever (500);
a rod (600) connected to the lever and thus movable in a vertical direction according to the rotation of the lever;
a fixed control terminal module (800) fixedly installed at the main body; and
a movable control terminal module (700) installed at the cradle, connected to the rod thus vertically movable along with the rod vertically moving and movable to a position for being connected to the fixed control terminal module of the main body and a position for being disconnected therefrom
**characterized in that**
the cam (400) is provided with a protrusion (420) for transferring the rotation driving force, and a radius of the teeth portion of the cam (400) being greater than a radius of the teeth portion of the pinion gear (300a, 300b) so as to amplify a torque; and
the lever (500) has one end portion that can be connected to the cam or separated from the cam and rotatable by the rotation driving force transferred from the cam when connected to the cam, the lever being provided with a slot portion (510) corresponding to the protrusion (420) of the cam, the slot portion allowing the protrusion of the cam to be inserted within the slot portion to transfer the rotation driving force and to be separated from the slot to stop the rotation driving force.

2. The apparatus of claim 1, wherein a protruding portion (B1) is protruded from the main body or a member supporting the main body so as to be moved with the main body, and
wherein the cam is provided with a slot portion (410) coming into contact with the protruding portion so as to provide a horizontal driving force or separated from the protruding portion so as to stop providing the horizontal driving force so that the main body can be horizontally moved from the test position to the connected position or vice versa.

3. The apparatus of claim 2, wherein a pivot of the cam is disposed to be adjacent to the middle of a height of the main body so as to effectively transfer the horizontal driving force for horizontally moving the main body.

4. The apparatus of claim 2, wherein the slot portion provided at the cam consists of a cam slot portion having cam profiles extended long from the pivot of the cam so as to obtain the torque strong enough to connect the electric terminal of the main body and the electric terminal of the cradle to each other.

5. The apparatus of claim 4, wherein the cam profiles comprise:
an inlet surface (400b-1) forming an inlet of the cam slot portion; a first circular arc surface (400b-3) extended from the inlet surface by an angle larger than 90°and smaller than 180°and having a pre-determined first radius of curvature so as to decrease an inertial force of the main body; and
a second circular arc surface (400b-5) extended from the first circular arc surface and having a second radius of curvature smaller than the first radius of curvature.

6. The apparatus of claim 1, wherein the pinion gear comprise a first pinion gear installed on one common rotation shaft and meshed with the rack gears, and a second pinion gear meshed with teeth portion of the cam.

7. The apparatus of claim 1, wherein the fixed control terminal module fixed at the main body comprises:
a plurality of connectors (820) in which electric connection terminals are mounted and having each exterior enclosed by an electric insulating material; and
a supporting member (810) that supports the connectors.

8. The apparatus of claim 7, wherein the connectors are pin connectors.

9. The apparatus of claim 1, wherein the movable control terminal module installed at the cradle comprises:
a plurality of connectors (720) in which electric connection terminals are mounted and having each exterior enclosed by an electric insulating material; and
a supporting member (710) that supports the connectors.

10. The apparatus of claim 9, wherein the connectors are pin connectors.

## Patentansprüche

1. Steuerungsterminal-Automatische-Verbindung-Vorrichtung für einen Leistungsschalter in einem Leistungsschalter, der eine Aufnahmevorrichtung (A), die elektrisch mit einer elektrischen Last und einer Leistungsquelle auf einer Schaltung verbunden ist, und ein Hauptgehäuse (B) umfasst, das zu einer verbundenen Positionen, bei welcher das Hauptgehäuse elektrisch mit der Aufnahmevorrichtung verbunden ist, zu einer Testposition, bei der das Hauptgehäuse elektrisch von der Aufnahmevorrichtung getrennt ist aber bei der eine Steuerungsleistungsquelle verbunden ist und eine Signaleingabe/-ausgabe implementiert ist, und zu einer getrennten Position bewegbar ist, bei der das Hauptgehäuse elektrisch von der Aufnahmevorrichtung getrennt ist, die Steuerungsleistungsquelle nicht geliefert wird und die Signaleingabe/-ausgabe nicht implementiert ist, wobei die Steuerungsterminal-Automatische-Verbindung-Vorrichtung umfasst:
eine Spindel (S) die mit einem Gewindeanteil bereitgestellt ist und die manuell rotierbar ist, indem sie mit einem Griff verbunden wird;
eine bewegbare Platte (MP), die mit dem Gewindeanteil der Spindel verbunden ist durch Ineinandergreifen, um so vor und zurück entlang des Gewindeanteils der rotierenden Spindel bewegbar zu sein;
eine Zahnstange (R), die auf einer oberen Oberfläche der bewegbaren Platte installiert ist, um so vor und zurück bewegbar zu sein zusammen mit der bewegbaren Platte, die sich vor und zurück bewegt;
ein Antriebszahnrad (300a, 300b), das mit einem Zahnanteil bereitgestellt wird, das an jeweiligen Positionen des Hauptgehäuses installiert ist, um mit der Zahnstange ineinanderzugreifen und demzufolge drehbar zu sein gemäß der Zahnstange, die sich vor und zurück bewegt;
eine Nocke (400), die mit einem Zahnanteil bereitgestellt ist, der mit dem Antriebszahnrad ineinander greift, wobei die Welle rotierbar ist, um so eine Rotationsantriebskraft von dem Antriebszahnrad zu übertragen;
einen Hebel (500);
eine Stange (600), die mit dem Hebel (500) verbunden ist und dadurch in einer vertikalen Richtung gemäß der Rotation des Hebels bewegbar ist;
ein festes Steuerungsterminal-Modul (800), das fest an dem Hauptgehäuse installiert ist; und
ein bewegbares Steuerungsterminal-Modul (700), das an der Aufnahmevorrichtung installiert ist, das mit der Stange verbunden ist, wodurch es vertikal bewegbar zusammen mit der Stange ist, die sich vertikal bewegt, und das zu einer Position, um mit dem festen Steuerungsterminal-Modul des Hauptgehäuses verbunden zu werden, und zu einer Position, um davon getrennt zu sein, bewegbar ist;
**dadurch gekennzeichnet dass**
die Nocke (400) mit einem Vorsprung (420) bereitgestellt ist zum Übertragen der Rotationsantriebskraft, wobei der Radius des Zahnanteils der Nocken (400) größer ist als ein Radius des Zahnanteils des Antriebszahnrads (300a, 300b), um so ein Drehmoment zu verstärken; und
der Hebel (500) einen Endanteil aufweist, der mit der Nocke verbunden sein kann oder von der Nocke getrennt sein kann und der durch die Rotationsantriebskraft, die von der Nocke übertragen wird, rotierbar ist, wenn er mit der Nocke verbunden ist, wobei der Hebel mit einem Schlitzanteil (510) bereitgestellt wird, der dem Vorsprung (420) der Nocke entspricht, wobei der Schlitzanteil es dem Vorsprung der Nocke erlaubt, in den Schlitzanteil eingefügt zu werden, um die Rotationsantriebskraft zu übertragen, und es dem Vorsprung der Nocke erlaubt, von dem Schlitz getrennt zu werden, um die Rotationsantriebskraft anzuhalten.

2. Vorrichtung nach Anspruch 1, wobei ein herausragender Anteil (B1) aus dem Hauptgehäuse oder einem Element, das das Hauptgehäuse unterstützt, herausragt, um so mit dem Hauptgehäuse bewegt zu werden, und
wobei die Nocke mit einem Schlitzanteil (410) bereitgestellt ist, der in Kontakt mit dem herausragenden Anteil kommt, um so eine horizontale Antriebskraft bereitzustellen, oder von dem herausragenden Anteil getrennt wird, um so das Bereitstellen der horizontalen Antriebskraft anzuhalten, so dass das Hauptgehäuse horizontal von der Testposition zu der verbundenen Position oder umgekehrt bewegt werden kann.

3. Vorrichtung nach Anspruch 2, wobei ein Drehpunkt der Nocke angeordnet ist, um an die Mitte einer Höhe des Hauptgehäuses angrenzend zu sein, um so effektiv die horizontale Antriebskraft für das horizontale Bewegen des Hauptgehäuses zu übertragen.

4. Vorrichtung nach Anspruch 2, wobei der Schlitzanteil, der an der Nocke bereitgestellt ist, aus einem Nockenschlitzanteil besteht, der Nockenprofile aufweist, die lang von dem Drehpunkt der Nocke verlängert sind, um so das Drehmoment zu erhalten, dass hoch genug ist, um den elektrischen Terminal des Hauptgehäuses und den elektrischen Terminal der Aufnahmevorrichtung miteinander zu verbinden.

5. Vorrichtung nach Anspruch 4, wobei die Nockenprofile umfassen:
eine Eingangsoberfläche (400b-1), die einen Eingang des Nockenschlitzanteils bildet;
eine erste kreisförmige Bogenoberfläche (400b-3), die von der Eingangsoberfläche um einen Winkel größer als 90° und kleiner als 180° verlängert ist, und die einen vorbestimmten ersten Krümmungsradius aufweist, um so eine Trägheitskraft des Hauptgehäuses zu verringern; und
eine zweite kreisförmige Bogenoberfläche (400b-5), die von der ersten kreisförmigen Bogenoberfläche verlängert ist, und die einen zweiten Krümmungsradius aufweist, der kleiner ist als der erste Krümmungsradius.

6. Vorrichtung nach Anspruch 1, wobei das Antriebszahnrad ein erstes Antriebszahnrad, das auf einer ersten gemeinsamen Rotationswelle installiert ist und das mit den Zahnstangen ineinander greift, und ein zweites Antriebszahnrad umfasst, das mit dem Zahnanteil der Nocke ineinander greift.

7. Vorrichtung nach Anspruch 1, wobei das feste Steuerungsterminal-Modul, das an dem Hauptgehäuse befestigt ist, umfasst:
eine Vielzahl von Verbindern (820), in denen elektrische Verbindungsterminals montiert sind und die jeweils ein Äußeres aufweisen, das durch ein elektrisch isolierendes Material umgeben ist; und
ein Unterstützungselement (810), das die Verbinder unterstützt.

8. Vorrichtung nach Anspruch 7, wobei die Verbinder Pin-Verbinder sind.

9. Vorrichtung nach Anspruch 1, wobei das bewegliche Steuerungsterminal-Modul, das an der Aufnahmevorrichtung installiert ist, umfasst:
eine Vielzahl von Verbindern (720), in denen elektrische Verbindungsterminals montiert sind und die jeweils ein Äußeres aufweisen, das von einem elektrisch isolierenden Material umgeben ist; und
ein Unterstützungselement (710), das die Verbinder unterstützt.

10. Vorrichtung nach Anspruch 9, wobei die Verbinder Pin-Verbinder sind.

## Revendications

1. Un appareil de connexion automatique de borne de contrôle pour un coupe-circuit à air, dans un coupe-circuit à air comprenant un berceau (A) électriquement relié à une charge électrique et à une source d'alimentation sur un circuit, et un corps principal (B) qui est mobile vers une position connectée où le corps principal est électriquement connecté au berceau, une position de test où le corps principal est électriquement déconnecté du berceau mais où une source d'alimentation de contrôle est connectée et une entrée par sortie de signal est implémentée, et une position déconnectée où le corps principal est électriquement déconnecté du berceau, la source d'alimentation de contrôle n'est pas appliquée et l'entrée/sortie de signal n'est pas implémentée, l'appareil de connexion automatique de borne de contrôle comprenant :
une broche (S) pourvue d'une partie filetée et pouvant être tournée à la main par liaison à une poignée ;
une plaque mobile (MP) connectée à la partie filetée de la broche pour venir en prise de manière à pouvoir être déplacée dans un sens et dans l'autre le long de la partie filetée de la broche tournante ;
une denture de crémaillère (R) installée sur une surface supérieure de la plaque mobile de manière à pouvoir être déplacée dans un sens et dans l'autre en même temps que la plaque mobile se déplace dans un sens et dans l'autre ;
une denture de pignon (300a, 300b), pourvue d'une partie avec des dents, installée en des positions respectives du corps principal pour venir en prise avec la denture à crémaillère et permettre ainsi un pivotement en fonction du déplacement dans un sens et dans l'autre de la denture à crémaillère ;
une came (400) pourvue d'une partie dentée en prise avec la denture de pignon, la came pouvant être tournée de manière à transférer une force d'entrainement en rotation provenant de la denture de pignon ;
un levier (500) ;
une tige (600) connectée au levier (500) et étant donc mobile dans une direction verticale selon la rotation du levier ;
un module de borne de contrôle fixe (800) installé de manière fixe à l'emplacement du corps principal ; et
un module de borne de contrôle mobile (700) installé à l'endroit du berceau, connecté à la tige et ainsi verticalement mobile en même temps que la tige se déplace verticalement et mobile vers une position permettant d'être connecté au module de borne de contrôle fixe du corps principal et une position pour en être déconnecté,
**caractérisé en ce que** :
la came (400) est pourvue d'une saillie (24) pour transférer la force d'entrainement en rotation, un rayon de la partie dentée de la came (400) étant supérieur à un rayon de la partie dentée de la denture de pignon (300a, 300b) de manière à amplifier un couple; et
le levier (500) présente une partie d'extrémité qui peut être connectée à la came ou séparée de la came et qui peut être entrainée en rotation par la force d'entrainement en rotation transférée depuis la came lorsqu'il était connecté à la came, le levier étant pourvu d'une partie en fente (510) correspondant à la saillie (420) de la came, la partie en fente permettant à la saillie de la came d'être insérée à l'intérieur de la partie en fente pour transférer la force d'entrainement en rotation et d'être séparée de la fente pour arrêter la force d'entrainement en rotation.

2. L'appareil de la revendication 1, dans lequel une partie saillante (B1) est formée en saillie à partir du corps principal ou d'un organe supportant le corps principal de manière à être déplacée avec le corps principal, et dans lequel la came est pourvue d'une partie de fente (410) venant en contact avec la partie saillante de manière à procurer une force d'entrainement horizontale ou séparée de la partie saillante de manière à cesser de procurer la force d'entrainement horizontale de telle sorte que le corps principal puisse être déplacé horizontalement depuis la position de test jusqu'à la position connectée ou *vice versa.*

3. L'appareil de la revendication 2, dans lequel un pivot de la came est disposé de manière à être adjacent au milieu d'une hauteur du corps principal de manière à transférer effectivement la force d'entrainement horizontale pour déplacer horizontalement le corps principal.

4. L'appareil de la revendication 2, dans lequel la partie de fente formée à l'endroit de la came consiste en une partie de fente de came présentant des profils de came qui s'étendent en longueur à partir du pivot de la came de manière à obtenir le couple suffisamment fort pour connecter la borne électrique du corps principal et la borne électrique du berceau l'un à l'autre.

5. L'appareil de la revendication 4, dans lequel les profils de came comprennent :
une surface d'entrée (400b-1) formant une entrée de la partie de fente de came ;
une première surface en arc circulaire (400b-3) s'étendant de la surface d'entrée d'un angle supérieur à 90° et inférieur à 180° et présentant un premier rayon de courbure prédéterminée de manière à réduire une force d'inertie du corps principal ; et
une seconde surface en arc circulaire (400b-5) s'étendant à partir de la première surface en arc circulaire et présentant un second rayon de courbure inférieur au premier rayon de courbure.

6. L'appareil de la revendication 1, dans lequel la denture de pignon comprend une première denture de pignon installée sur un arbre de rotation commun et venant en prise avec les dentures de crémaillère, et une seconde denture de pignon venant en prise avec une partie dentée de la came.

7. L'appareil de la revendication 5, dans lequel le module de borne de contrôle fixe fixé au corps principal comprend :
une pluralité de connecteurs (820) dans lesquels sont montées des bornes de connexion électrique et dont chaque extérieur est entouré par un matériau isolant électrique ; et
un organe support (810) qui supporte les connecteurs.

8. L'appareil de la revendication 7, dans lequel les connecteurs sont des connecteurs à broches.

9. L'appareil de la revendication 1, dans lequel le module de borne de contrôle mobile installé à l'endroit du berceau comprend :
une pluralité de connecteurs (720) dans lesquels sont montées des bornes de connexion électrique et dont chaque extérieur est entouré par un matériau isolant électrique ; et
un organe support (710) qui supporte les connecteurs.

10. L'appareil de la revendication 9, dans lequel les connecteurs sont des connecteurs à broches.
